# EUROPÄISCHE PATENTANMELDUNG

(11) **EP 4 386 911 A1**
(43) Veröffentlichungstag der Anmeldung: **19.06.2024**
(21) Anmeldenummer: 23205010.4
(22) Anmeldetag: 20.10.2023
(51) Int. Cl.: H01M 8/0273, H01M 8/0286

(54) **VORRICHTUNG UND VERFAHREN ZUM ZUFÜHREN EINES RAHMENMATERIALS FÜR EINE MEMBRAN-BAUGRUPPE**

(30) Priorität: 12.12.2022 DE 102022213438
(71) Anmelder: OPTIMA life science GmbH, 74523 Schwäbisch Hall (DE)
(72) Erfinder: Dylla, Dr.- Ing. Norbert, 74541 Vellberg (DE)
(74) Vertreter: Patentanwälte Ruff, Wilhelm, Beier, Dauster & Partner mbB

(57) **Zusammenfassung**

Die Erfindung betrifft eine Vorrichtung und ein Verfahren zum Zuführen eines Rahmenmaterials (110) für eine Membran-Baugruppe, insbesondere eine Membran-Elektroden-Anordnung (MEA), zu einer Transporteinrichtung, wobei das Rahmenmaterial als Rollenware in einem Materialverbund mit einem mit einer ersten Seite des Rahmenmaterials (110) laminierten Schutzfilm (112) bereitgestellt ist, umfassend:eine Delaminationsstation (202), die eingerichtet ist, um vor einem Übertragen des Rahmenmaterials (110) an die Transporteinrichtung den Schutzfilm (112) von dem Rahmenmaterial (110) zu delaminieren, wobei stromabwärts der Delaminationsstation (202) und stromaufwärts der Transporteinrichtung eine Trägerbahn-Laminationsstation (203) vorgesehen ist, die eingerichtet ist, um eine Trägerbahn (3) mit dem Rahmenmaterial (110) zu laminieren.

## Beschreibung

Die Erfindung betrifft eine Vorrichtung und ein Verfahren zum Zuführen eines Rahmenmaterials für eine Membran-Baugruppe, insbesondere bei der Herstellung von Membran-Baugruppen als Rollenware.

Bei der Membran-Baugruppe handelt es sich in einer Ausgestaltung um eine Membran-Elektroden-Anordnung (kurz MEA) oder Teilen davon für eine Brennstoffzelle oder einen Elektrolyseur. Eine MEA umfasst in einer Ausgestaltung eine Katalysator-beschichtete Membran (engl. Catalyst Coated Membrane, kurz CCM), an welcher einseitig oder beidseitig Randverstärkungen oder Rahmen (engl. Frame oder rim) aus kostengünstigerem und widerstandsfähigerem Material vorgesehen sind. Für einen weiteren Aufbau können an Außenseiten der MEA zwei Gasdiffusionslagen (kurz GDL) angebracht werden. Ein Anbringen der GDL kann dabei in einem Prozess mit der Herstellung der MEA umfassend die CCM und die Randverstärkungen oder in einem räumlich und/oder zeitlich getrennten Prozess erfolgen. In einer anderen Ausgestaltung wird eine MEA umfassend eine Membran und zwei daran angeordnete Gasdiffusionslagen bereitgestellt, wobei an dieser MEA einseitig oder beidseitig Randverstärkungen oder Rahmen angebracht werden.

Daneben sind Membran-Baugruppen für andere Anwendungen bekannt, beispielsweise für Elektrolyseure, Redox-Flow-Batterien oder Membran-basierte Luftbefeuchter.

Aus DE 10 2020 206 609 A1 sind ein Verfahren und eine Vorrichtung zur Herstellung von Membran-Baugruppen in einem bahnverarbeitenden Prozess bekannt, wobei ein Materialverbund umfassend ein Rahmenmaterial und einen Schutzfilm bereitgestellt wird und wobei eine Vakuumtransporteinrichtung vorgesehen ist, auf welcher die Membran-Baugruppe zumindest teilweise aufgebaut wird, wobei der Schutzfilm vor einem Übertragen des Rahmenmaterials an die Vakuumtransporteinrichtung von dem Rahmenmaterial delaminiert wird.

### AUFGABE UND LÖSUNG

Es ist eine Aufgabe, eine Vorrichtung und ein Verfahren zum Zuführen eines Rahmenmaterials für die Herstellung von Membran-Baugruppen als Rollenware mit einer verbesserten Stabilität zu schaffen.

Diese Aufgabe wird gelöst durch die Gegenstände mit den Merkmalen der Ansprüche 1 und 6. Vorteilhafte Ausgestaltungen ergeben sich aus den Unteransprüchen.

Gemäß einem ersten Aspekt wird eine Vorrichtung zum Zuführen eines Rahmenmaterials für die Herstellung einer Membran-Baugruppe, insbesondere einer Membran-Elektroden-Anordnung (MEA), zu einer Transporteinrichtung als Rollenware geschaffen, wobei das Rahmenmaterial als Rollenware in einem Materialverbund mit einem mit einer ersten Seite des Rahmenmaterials laminierten Schutzfilm bereitgestellt ist, die Vorrichtung umfassend eine Delaminationsstation, die eingerichtet ist, um vor dem Übertragen des Rahmenmaterials an die Transporteinrichtung den Schutzfilm von dem Rahmenmaterial zu delaminieren, und eine stromabwärts der Delaminationsstation und stromaufwärts der Transporteinrichtung angeordnete Trägerbahn-Laminationsstation, die eingerichtet ist, um eine Trägerbahn mit dem Rahmenmaterial zu laminieren.

Gemäß einem zweiten Aspekt wird ein Verfahren zum Zuführen eines Rahmenmaterials für die Herstellung einer Membran-Baugruppe als Rollenware, insbesondere einer Membran-Elektroden-Anordnung (MEA), zu einer Transporteinrichtung geschaffen, wobei das Rahmenmaterial als Rollenware in einem Materialverbund mit einem mit einer ersten Seite des Rahmenmaterials laminierten Schutzfilm bereitgestellt wird, das Verfahren umfassend die Schritte Delamination des Schutzfilms von dem Rahmenmaterial vor einem Übertragen des Rahmenmaterials an die Transporteinrichtung, und Aufbauen der Membran-Baugruppe als Rollenware, wobei ein Membran-Material mit dem ersten Rahmenmaterial laminiert wird, wobei nach der Delamination des Schutzfilms von dem ersten Rahmenmaterial und vor einem Übertragen des Rahmenmaterials an die Transporteinrichtung, eine Lamination des Rahmenmaterials mit einer geschlossenen Trägerbahn erfolgt.

Die Begriffe "erster" und "zweiter" dienen im Zusammenhang mit der Anmeldung lediglich zur Unterscheidung und geben keine Reihenfolge an. Auch verlangen die Begriffe "erste", "erster" etc. nicht zwangsweise ein Vorhandensein von zweiten baugleichen oder ähnlichen Elementen. Die Begriffe "ein", "einer" etc. werden im Zusammenhang mit der Anmeldung als unbestimmte Artikel und nicht als Zählwörter verwendet.

Ein bahnförmiges Rahmenmaterial, ein bahnförmiger Schutzfilm, eine Trägerbahn oder ein anderes bahnförmiges Material werden im Zusammenhang mit der Anmeldung als Materialbahnen bezeichnet. Als Lamination wird dabei im Zusammenhang mit der Anmeldung sowohl ein temporäres als auch ein dauerhaftes Verbinden von Materialbahnen bezeichnet. Entsprechend wird ein Ablösen oder Trennen der Materialbahnen als Delamination bezeichnet.

Als geschlossene Trägerbahn wird eine Materialbahn bezeichnet, welche keine oder nur unwesentliche Einschnitte oder Durchbrüche und somit eine hohe Stabilität gegen einen Verzug bei einer Verarbeitung aufweist.

Als Rahmenmaterial wird dabei ein Material zur Herstellung der Rahmen bezeichnet. Das Rahmenmaterial kann als ungeschnittene Rollenware, mit Einschnitten oder bereits mit ausgeschnittenen und herausgetrennten Fenstern für die Rahmen bereitgestellt werden.

Das als Rollenware bereitgestellte Rahmenmaterial ist zunächst mittels des Schutzfilms stabilisiert. Nach der Delamination des Schutzfilms erfolgt eine Lamination mit einer Trägerbahn, wobei eine Stabilisierung des Rahmenmaterials und ein verzugfreier Transport mittels der Trägerbahn sichergestellt ist. Um eine zuverlässige Delamination des Schutzfilms von dem Rahmenmaterial sicherzustellen, erfolgt eine Delamination des Schutzfilms vor einer Lamination des ersten Rahmenmaterials mit der Trägerbahn.

Ein Aufbau der Membran-Baugruppe erfolgt in Ausgestaltungen zumindest abschnittsweise auf der Trägerbahn, nachdem die Trägerbahn mit dem damit laminierten Rahmenmaterial an die Transporteinrichtung übertragen wurde. Die auf der Trägerbahn aufgebaute und mittels der Trägerbahn stabilisierte Membran-Baugruppe wird in einer Ausgestaltung als Rollenware für eine örtlich und/oder räumlich getrennte Weiterverarbeitung zwischengespeichert. In anderen Ausgestaltungen erfolgt eine unmittelbare Weiterverarbeitung in einer bahnverarbeitenden Anlage.

Die Trägerbahn erlaubt einen Transport des Rahmenmaterials zu der Transporteinrichtung sowie einen Transport der auf der Trägerbahn ganz oder teilweise aufgebauten Membran-Baugruppe entlang verschiedener Einrichtungen und/oder Stationen.

Die Transporteinrichtung umfasst in einer Ausgestaltung ein Förderband oder mehrere Förderbänder, auf welchem oder welchen die Trägerbahn abgelegt ist. In anderen Ausgestaltungen umfasst die Transporteinrichtung eine rotierende Walze, mittels welcher die Trägerbahn transportiert wird. In Ausgestaltungen der Vorrichtung ist die Transporteinrichtung eine Vakuumtransporteinrichtung. Die Vakuumtransporteinrichtung umfasst in einer Ausgestaltung ein Vakuumtransportband, mittels welchem eine lineare Förderung erfolgt. Alternativ oder zusätzlich umfasst die Vakuumtransporteinrichtung in einer anderen Ausgestaltung eine Vakuumwalze.

Ein Transport des Rahmenmaterials beim Aufbau der Membran-Baugruppe mittels einer Trägerbahn erlaubt dabei auch einen einfachen Wechsel zwischen Transportmitteln einer Transporteinrichtung, beispielsweise zwischen unterschiedlichen Förderbändern und/oder zwischen einer Walze und einem Förderband.

In einer Ausgestaltung weist die Trägerbahn an ihrer dem Rahmenmaterial zugewandten Seite adhäsive Eigenschaften auf, wobei die Trägerbahn in einer Ausgestaltung rückstandslos von dem Rahmenmaterial delaminierbar ist, so dass mittels der Delamination freigelegte Oberfläche des Rahmenmaterials keine adhäsiven Eigenschaften aufweist. In anderen Ausgestaltungen wird die freigelegte Oberfläche in einer Weiterverarbeitung mit weiteren Schichten verbunden, so dass adhäsive Rückstände akzeptabel sind.

Der Schutzfilm dient in einer Ausgestaltung einer Abdeckung einer an dem Rahmenmaterial vorgesehenen Klebeschicht, welche einer sicheren Verbindung des Rahmenmaterials mit dem Membran-Material und/oder einem zweiten Rahmenmaterial dient.

Bei dem Membran-Material handelt es sich in einer Ausgestaltung um eine CCM für eine MEA. In anderen Ausgestaltungen handelt es sich bei dem Membran-Material um eine Membran mit zwei Elektroden. Das Membran-Material wird in vorteilhaften Ausgestaltungen in Form von Zuschnitten zugeführt, welche auf dem bahnförmigen Rahmenmaterial abgelegt werden. In anderen Ausgestaltungen ist ein bahnförmiges Membran-Material vorgesehen, wobei das bahnförmige Membran-Material in einer Ausgestaltung aktive und nicht aktive Bereiche aufweist.

In einer Ausgestaltung ist vorgesehen, die Trägerbahn mit einer der ersten Seite des Rahmenmaterials gegenüberliegenden zweiten Seite zu laminieren. Die Trägerbahn wird dabei insbesondere an einer gegenüberliegenden Seite des Rahmenmaterials zu einer nach Delamination des Schutzfilms freigelegten Klebeschicht angebracht.

Die Delaminationsstation weist in Ausgestaltungen eine erste Walze, insbesondere eine erste Vakuumwalze, auf, an welche der Materialverbund umfassend das Rahmenmaterial und den Schutzfilm vor einer Delamination des Schutzfilms übertragbar ist und die eingerichtet ist, um das Rahmenmaterial bei einer Delamination des Schutzfilms abzustützen. Mittels der Walze, insbesondere mittels der Vakuumwalze, ist eine sichere Abstützung des Rahmenmaterials für die Delamination des Schutzfilms möglich.

In einer Ausgestaltung umfasst die Delaminationsstation eine zweite Walze, insbesondere eine zweite Vakuumwalze, wobei die erste Walze und die zweite Walze derart angeordnet sind, dass das Rahmenmaterial von der ersten Walze an die zweite Walze übertragbar ist, und wobei die zweite Walze eingerichtet ist, um das Rahmenmaterial zu der Trägerbahn-Laminationsstation zu transportieren. Dadurch ist ein Wenden des bahnförmigen Rahmenmaterials zwischen der Delamtionsstation und der Membran-Laminationseinrichtung möglich, sodass an der Delamtionsstation die erste Seite des Rahmenmaterials und der Membran-Laminationseinrichtung die zweite Seite des Rahmenmaterials frei liegt. Gleichzeitig wird mittels der Walzen ein freier, nicht abgestützter Transport des Rahmenmaterials vermieden.

In einer Ausgestaltung wird der Materialverbund umfassend das Rahmenmaterial und den Schutzfilm als Rollenware bereitgestellt, wobei das Rahmenmaterial Stanzkonturen für Fensterausschnitte und andere Strukturen für den aus dem Rahmenmaterial herzustellenden Rahmen aufweist.

Alternativ ist stromaufwärts der Delaminationsstation eine Stanzstation vorgesehen, die eingerichtet ist, um in den Materialverbunds von einer der ersten Seite gegenüberliegenden zweite Seite des Rahmenmaterials das Rahmenmaterial durchtrennende Konturschnitte unter Bildung von Stanzresten einzubringen, wobei die Konturschnitte eingebracht werden ohne den Schutzfilm zu durchtrennen und wobei die Delaminationsstation eingerichtet ist, um den Schutzfilms von dem Rahmenmaterial mit den Stanzresten zu delaminieren.

Die Konturschnitte werden in Ausgestaltungen mittels eines Stanzverfahrens, insbesondere mittels Rotationsstanzen, in das Rahmenmaterial eingebracht. Der Schutzfilm dient dabei in vorteilhaften Ausgestaltungen als Schneidunterlage. Ein Einbringen der Konturschnitte erfolgt dabei in einem gemeinsamen Prozess mit einer Weiterverarbeitung des Materialverbunds.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der schematischen Figuren erläutert sind. Dabei zeigen:
- Fig. 1: eine Membran-Baugruppe umfassend einen ersten Rahmen, einen zweiten Rahmen und eine dazwischen angeordnete Membran;
- Fig. 2: eine erste Ausgestaltung einer Vorrichtung zur Herstellung der Membran-Baugruppe gemäß Fig. 1 als Rollenware;
- Fig. 3: eine ersten Materialverbund umfassend ein erstes bahnförmiges Rahmenmaterial zur Herstellung der Membran-Baugruppe gemäß Fig. 1; und
- Fig. 4: das bahnförmige Rahmenmaterial gemäß Fig. 3 nach Delamination eines Schutzfilms und Lamination mit einer Trägerbahn.

### DETAILLIERTE BESCHREIBUNG DER AUSFÜHRUNGSBEISPIELE

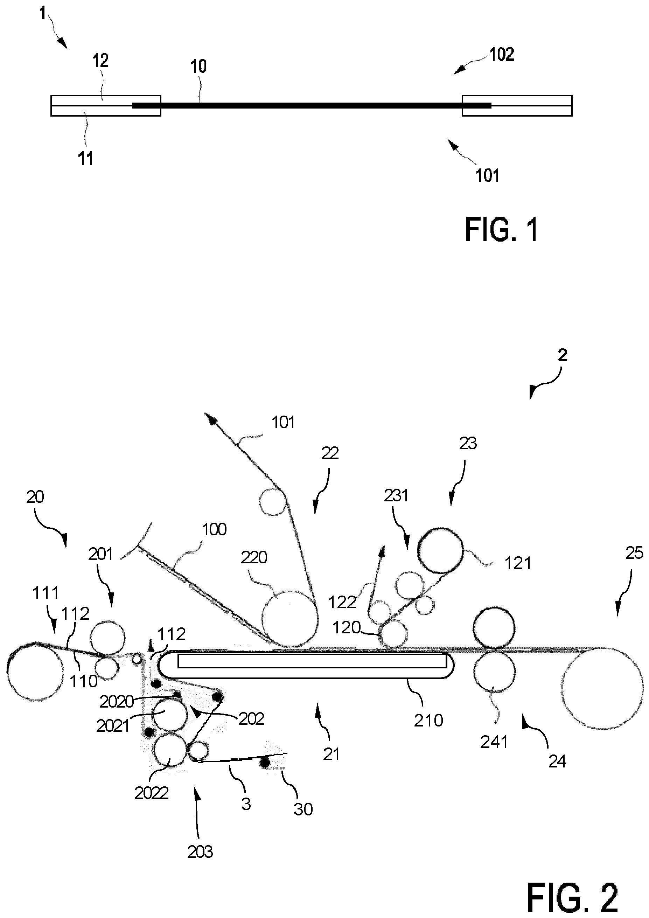

Fig. 1 zeigt schematisch eine Membran-Baugruppen 1 umfassend einen ersten Rahmen 11, einen zweiten Rahmen 12 und eine dazwischen angeordnete Membran 10. Die Rahmen 11, 12 umgeben einen Funktionsbereich der Membran 10 und decken Außenränder der Membran 10 vorzugsweise vollumfänglich ab. Je nach Ausgestaltung dienen die Rahmen 11, 12 als Anschluss für weiterer Bauteile und/oder einer Abdichtung der Membran 10. Die durch die Rahmen 11, 12 begrenzten Ausnehmungen im Bereich der Membran 10 werden im Zusammenhang mit der Anmeldung als Fenster 101, 102 bezeichnet.

Fig. 2 zeigt ein erstes Ausführungsbeispiel einer Anlage 2 zur Herstellung einer Membran-Baugruppe gemäß Fig. 1, wobei für die Rahmen 11, 12 ein erstes Rahmenmaterial 110 und ein zweites Rahmenmaterial 120 als Rollenware bereitgestellt werden.

Die dargestellte Anlage 2 umfasst eine Vorrichtung 20 zum Zuführen des ersten Rahmenmaterials 110, eine Transporteinrichtung 21, eine Membran-Laminationseinrichtung 22, eine Materialzufuhreinrichtung 23 für das zweite bahnförmigen Rahmenmaterial 120, eine Fixiereinrichtung 24 und eine Aufwickeleinrichtung 25.

Das erste bahnförmigen Rahmenmaterial 110 für den ersten Rahmen 11 wird als Materialverbund 111 mit einem Schutzfilm 112 bereitgestellt. Das erste Rahmenmaterial 110 wird in dem Ausführungsbeispiel als ungeschnittene Rollenware bereitgestellt.

Die in Fig. 2 dargestellte Vorrichtung 20 zum Zuführen des ersten Rahmenmaterials 110 umfasst eine Stanzstation 201, eine Delaminationsstation 202 zum Delaminieren oder Abziehen des Schutzfilms 112 und eine Trägerbahn-Laminationsstation 203, die eingerichtet ist, um eine Trägerbahn 3 mit dem ersten Rahmenmaterial 110 nach einer Delamination des Schutzfilms 112 für eine Stabilisierung des ersten Rahmenmaterials 110 zu laminieren. In dem dargestellten Ausführungsbeispiel ist der Schutzfilm 112 an einer ersten Seite des Rahmenmaterials 110 angeordnet. Der Schutzfilm 112 deckt dabei beispielsweise eine Klebeschicht zur Verbindung des ersten Rahmenmaterials 110 mit dem zweiten Rahmenmaterial 120 und/oder mit der Membran 10 ab. Die Trägerbahn 3 wird stromabwärts der Delaminationsstation 202 mit einer der ersten Seite des ersten Rahmenmaterials 110 gegenüberliegenden zweiten Seite laminiert. Die Trägerbahn 3 dient dann einer Stabilisierung des Rahmenmaterials 120 für einen weiteren Transport in der Anlage 2 und/oder in nachfolgenden Prozessen und Anlagen.

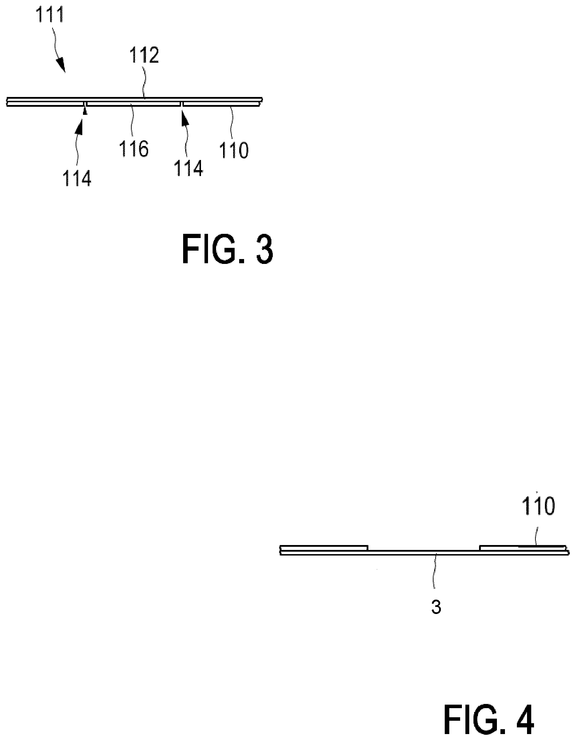

Fig. 3 zeigt schematisch den ersten Materialverbund 111 umfassend das erste bahnförmige Rahmenmaterial 110 und den Schutzfilms 112, welcher beispielsweise eine an dem Rahmenmaterial 110 vorgesehene Klebeschicht abgedeckt. In das bahnförmige Rahmenmaterial 110 sind mittels der in Fig. 2 schematisch dargestellten Stanzstation 201 Konturschnitte 114 entlang Innenkonturen des ersten Rahmens 11 eingebracht, wobei das Rahmenmaterial 110 mittels der Konturschnitte 114 durchtrennt ist, ohne dass der Schutzfilm 112 durchtrennt ist. Der Schutzfilm 112 dient so zudem auch einer Stabilisierung des ersten bahnförmigen Rahmenmaterial 110. Ein durch den Konturschnitt 114 begrenzter Stanzrest 116 verbleibt bei einer Delamination des Schutzfilms 112 an dem Schutzfilm 112. In anderen Ausgestaltungen erfolgt ein Einschneiden des Materialverbunds 111 in einer separaten Vorrichtung, zeitlich und örtlich getrennt von der Anlage 2.

Die Delaminationsstation 202 ist in dem dargestellten Ausführungsbeispiel geeignet gestaltet, um den Schutzfilm 112 mit den Stanzresten 116 von dem verbleibenden Rahmenmaterial 110 zu delaminieren. Delaminationsstation 202 umfasst eine Delaminationskante 2020, mittels welcher der Schutzfilm 112 mit den daran anhaftenden Stanzresten 116 (vgl. Fig. 3) umgelenkt wird. Bei der Delaminationskante 2020 handelt es sich in einer Ausgestaltung um ein in der nachveröffentlichten Anmeldung DE 102022206200.0 beschriebenes Umlenkelement.

Die Delaminationskante 2020 wirkt in dem dargestellten Ausführungsbeispiel mit einer ersten Walze 2021 zusammen. Bei der ersten Walze handelt es sich in Ausgestaltungen um eine Vakuumwalze, wobei das Rahmenmaterial 110 mittels einer Saugströmung an die Walze 2021 angesaugt wird. Das Rahmenmaterial 110 wird mittels der ersten Walze 2021 stabilisiert, sodass ein verzugfreier Transport des ersten Rahmenmaterials 110 auch nach der Delamination des Schutzfilms 112 sichergestellt ist.

Die dargestellte Delaminationsstation 202 umfasst eine zweite Walze 2022, insbesondere eine zweite Vakuumwalze, wobei das erste Rahmenmaterial 110 von der ersten Walze 2021 an die zweite Walze 2022 übertragbar ist. Die zweite Walze 2022 ist eingerichtet, um das erste Rahmenmaterial 110 zu der Trägerbahn-Laminationsstation 203 zu transportieren, wobei das Rahmenmaterial 110 gewendet wird, sodass eine zweite Seite des Rahmenmaterials 110 für eine Lamination der Trägerbahn 3 freiliegt.

Fig. 4 zeigt das bahnförmige, Fensterausschnitte aufweisende Rahmenmaterial 110 nach Delamination des Schutzfilms 112 mit den Stanzresten 116 (s. Fig. 3) und nach Lamination mit der Trägerbahn 3.

Wie in Fig. 2 dargestellt, wird die Trägerbahn 3 in dem dargestellten Ausführungsbeispiel auf einem Schutzfilm 30 bereitgestellt, welcher stromaufwärts der Trägerbahn-Laminationsstation 203 von der Trägerbahn 3 delaminiert wird.

Die Vorrichtung 20 zum Zuführen des ersten Rahmenmaterials 110 umfasst zudem eine Vielzahl an schematisch angeordneten Umlenkrollen. Die Anzahl und Anordnung der Umlenkrollen ist je nach Anwendungsfall durch den Fachmann geeignet wählbar.

Das mit der Trägerbahn 3 laminierte und mittels der Trägerbahn 3 stabilisierte Rahmenmaterial 110 wird an die Transporteinrichtung 21 übertragen. Die dargestellte Transporteinrichtung 21 ist als Vakuumtransporteinrichtung umfassend ein Vakuumtransportband 210 gestaltet, wobei die Trägerbahn 3 auf dem Vakuumtransportband 210 aufliegt.

Die Membran-Laminationseinrichtung 22 und die zweite Materialzuführeinrichtung 23 sind in dem dargestellten Ausführungsbeispiel entlang der Transporteinrichtung 21 angeordnet.

Die Membran-Laminationseinrichtung 22 ist in dem dargestellten Ausführungsbeispiel eingerichtet, um ein Membran-Material in Form von Zuschnitten 100 auf dem bahnförmigen Rahmenmaterial 110 abzulegen. Die Zuschnitte 100 sind in dem dargestellten Ausführungsbeispiel auf eine Schutzfilm 101 angeordnet und werden mittels einer schematisch als Rolle 220 dargestellten Einrichtung auf das Rahmenmaterial 110 laminiert. Ein Ablegen erfolgt dabei in einer Ausgestaltung gemäß einem in der nachveröffentlichten Anmeldung DE 102020214263.7 beschriebenen Verfahren und/oder mittels einer in dieser Anmeldung beschriebenen Vorrichtung.

Anstelle der Zuschnitte 100 wird in einer alternativen Ausgestaltung ein Membran-Material als Rollenware bereitgestellt, wobei die Rollenware abschnittsweise beschichtet ist, um aktive Bereiche zu schaffen.

In dem in Fig. 2 dargestellten Ausführungsbeispiel wird das zweite Rahmenmaterial 120 bahnförmig und als Materialverbund 121 mit einem Schutzfilm 122 an der zweiten Materialzuführeinrichtung 23 bereitgestellt.

Die in Fig. 2 dargestellte Materialzuführeinrichtung 23 zum Zuführen des zweiten Rahmenmaterials umfasst eine Stanzstation 231, die eingerichtet ist, um in das zweite bahnförmige Rahmenmaterial 120 Konturschnitte entlang Innenkonturen des zweiten Rahmens 12 einzubringen, wobei der Schutzfilm 122 nicht durchtrennt oder beschädigt wird. In dem dargestellten Ausführungsbeispiel wird der Schutzfilm 122 mit Stanzresten des zweiten Rahmenmaterials 120 vor einer Lamination des zweiten Rahmenmaterials 120 mit dem ersten Rahmenmaterial 110 und den dazwischen angeordneten Zuschnitten 100 von dem zweiten Rahmenmaterial delaminiert. In anderen Ausgestaltungen verbleibt der Schutzfilm 122 mit den Stanzresten des zweiten Rahmenmaterials 120 an dem zweiten Rahmenmaterial 120 und dient so nach der Lamination als Schutzfilm für die der Trägerbahn 3 abgewandte Seite der hergestellten Membran-Baugruppe.

In dem dargestellten Ausführungsbeispiel wird anschließend an die Transporteinrichtung 21 die mittels der Trägerbahn 3 stabilisierte, als Rollenware vorliegende Membran-Baugruppe 1 der Fixierstation 24 zugeführt, in welcher ein Aushärten einer der an dem ersten Rahmenmaterial 110 und/oder dem zweiten Rahmenmaterial 120 vorgesehenen Klebeschicht erfolgt, um die Membran-Baugruppe umfassend das erste Rahmenmaterial 110, die Membran-Zuschnitte 100 und das zweite Rahmenmaterial 120 zu fixieren. In einer Ausgestaltung erfolgt ein Aushärten unter Druck mittels schematisch dargestellter Druckwalzen 241. Je nach Anwendungsfall erfolgt alternativ oder zusätzlich ein thermisches Aushärten und/oder ein Strahlungshärten der Klebeschicht. Die Membran-Baugruppe wird dabei mittels der Trägerbahn 3 zwischen den Druckwalzen 241 geführt.

Der mittels der Trägerbahn 3 stabilisierte, bahnförmige Materialverbund ist anschließend zu der dargestellten Anlage 2 einer bahnverarbeitenden Anlage für eine Weiterverarbeitung zuführbar. Wie schematisch in Fig. 2 dargestellt, wird die auf der Trägerbahn 3 angeordneten Membran-Baugruppe 1 in dem dargestellten Ausführungsbeispiel zu diesem Zweck einer Aufwickeleinrichtung 25 für eine Herstellung von Materialrollen für eine Zwischenspeicherung zugeführt.

Die in Fig. 2 dargestellte Ausgestaltung der Anlage 2 ist lediglich beispielhaft und es sind zahlreiche Abwandlungen denkbar.

In dem dargestellten Ausführungsbeispiel sind die Walzen 2021, 2022 der Vorrichtung 20 zum Zuführen des ersten Rahmenmaterials 100 unterhalb einer Transportebene der Vakuumtransporteinrichtung 21 angeordnet. Die Anordnung erlaubt eine effiziente Bauraumausnutzung. Die Erfindung ist jedoch nicht auf diese Anordnung beschränkt.

## Patentansprüche

1. Vorrichtung zum Zuführen eines Rahmenmaterials (110) für eine Membran-Baugruppe, insbesondere eine Membran-Elektroden-Anordnung (MEA), zu einer Transporteinrichtung (21), wobei das Rahmenmaterial als Rollenware in einem Materialverbund mit einem mit einer ersten Seite des Rahmenmaterials (110) laminierten Schutzfilm (112) bereitgestellt ist, umfassend:
- eine Delaminationsstation (202), die eingerichtet ist, um vor einem Übertragen des Rahmenmaterials (110) an die Transporteinrichtung den Schutzfilm (112) von dem Rahmenmaterial (110) zu delaminieren,
**dadurch gekennzeichnet, dass** stromabwärts der Delaminationsstation (202) und stromaufwärts der Transporteinrichtung eine Trägerbahn-Laminationsstation (203) vorgesehen ist, die eingerichtet ist, um eine Trägerbahn (3) mit dem Rahmenmaterial (110) zu laminieren.

2. Vorrichtung nach Anspruch 1, **dadurch gekennzeichnet, dass** die Vorrichtung eingerichtet ist, um die Trägerbahn (3) mit einer der ersten Seite des Rahmenmaterials (110) gegenüberliegenden zweiten Seite zu laminieren.

3. Vorrichtung nach Anspruch 1 oder 2, **dadurch gekennzeichnet, dass** die Delaminationsstation (202) eine erste Walze (2021), insbesondere eine erste Vakuumwalze, aufweist, eingerichtet ist, um das Rahmenmaterial (110) bei einer Delamination des Schutzfilms (112) abzustützen.

4. Vorrichtung nach Anspruch 1, 2 oder 3, **dadurch gekennzeichnet, dass** die Delaminationsstation (202) eine zweite Walze (2022), insbesondere eine zweite Vakuumwalze, aufweist, wobei die erste Walze (2021) und die zweite Walze (2022) derart angeordnet sind, dass das Rahmenmaterial (110) von der ersten Walze(2021) an die zweite Walze (2022) übertragbar ist, und wobei die zweite Walze (2022) eingerichtet ist, um das Rahmenmaterial (110) zu der Trägerbahn-Laminationsstation (203) zu transportieren.

5. Vorrichtung nach einem der Ansprüche 1 bis 4, **dadurch gekennzeichnet, dass** stromaufwärts der Delaminationsstation (202) eine Stanzstation (201) vorgesehen ist, die eingerichtet ist, um in den Materialverbunds (111) umfassend das Rahmenmaterial (110) und den Schutzfilm (112) von einer der ersten Seite gegenüberliegenden zweite Seite des Rahmenmaterials (110) das Rahmenmaterial (110) durchtrennende Konturschnitte (114) unter Bildung von Stanzresten (116) einzubringen, wobei die Konturschnitte (114) eingebracht werden ohne den Schutzfilm (112) zu durchtrennen und wobei die Delaminationsstation (202) eingerichtet ist, um den Schutzfilms (112) von dem Rahmenmaterial (110) mit den Stanzresten (116) zu delaminieren.

6. Verfahren zum Zuführen eines Rahmenmaterials (110) für eine Membran-Baugruppe, insbesondere eine Membran-Elektroden-Anordnung (MEA), zu einer Transporteinrichtung (21), wobei das Rahmenmaterial als Rollenware in einem Materialverbund mit einem mit einer ersten Seite des Rahmenmaterials (110) laminierten Schutzfilm (112) bereitgestellt wird, umfassend:
- eine Delamination des Schutzfilms (112) von dem Rahmenmaterial (110) vor einem Übertragen des Rahmenmaterials (110) an die Transporteinrichtung,
**dadurch gekennzeichnet, dass** nach der Delamination des Schutzfilms (112) von dem Rahmenmaterial (110) und vor dem Übertragen des Rahmenmaterials (110) an die Transporteinrichtung eine Lamination des Rahmenmaterials (110) mit einer geschlossenen Trägerbahn (13) erfolgt.

7. Verfahren nach Anspruch 6, **dadurch gekennzeichnet, dass** die Trägerbahn (3) mit einer der ersten Seite des Rahmenmaterials (110) gegenüberliegenden zweiten Seite laminiert wird.

8. Verfahren nach Anspruch 6 oder 7, **dadurch gekennzeichnet, dass** der Materialverbund (111) umfassend das Rahmenmaterial (110) und den Schutzfilm (112) vor einer Delamination des Schutzfilms (112) an eine Walze (2021), insbesondere eine erste Vakuumwalze, übertragen wird, wobei das Rahmenmaterial (110) bei der Delamination des Schutzfilms (112) mittels der ersten Walze (2021) abgestützt wird.

9. Verfahren nach Anspruch 8, **dadurch gekennzeichnet, dass** das Rahmenmaterial (110) nach der Delamination des Schutzfilms von der ersten Walze (2021) an eine zweite Walze (2022), insbesondere eine zweite Vakuumwalze, übertragen wird, wobei das Rahmenmaterial (110) bei der Lamination des bahnförmigen Trägerbahns (3) mittels der zweitem Walze (2022) abgestützt wird.

10. Verfahren nach einem der Ansprüche 6 bis 9, **dadurch gekennzeichnet, dass** in den Materialverbund (111) umfassend das Rahmenmaterial (110) und den Schutzfilm (112) von einer der ersten Seite gegenüberliegenden zweite Seite des Rahmenmaterials (110) das Rahmenmaterial (110) durchtrennende Konturschnitte (114) unter Bildung von Stanzresten (116) eingebracht werden, wobei die Konturschnitte (114) eingebracht werden ohne den Schutzfilm (112) zu durchtrennen und wobei die Delamination des Schutzfilms (112) von dem Rahmenmaterial (110) mit den Stanzresten (116) erfolgt.
